# EUROPEAN PATENT APPLICATION

(11) **EP 4 075 615 A1**
(43) Date of publication of application: **19.10.2022**
(21) Application number: 22167817.0
(22) Date of filing: 12.04.2022
(51) Int. Cl.: H02G 1/08

(54) **PROBE FOR INSERTING CABLES INTO SPECIFIC DUCTS**

(30) Priority: 13.04.2021 IT 202100001901 U
(71) Applicant: Marcheschi, Filippo, 55100 Lucca (IT)
(72) Inventor: Marcheschi, Filippo, 55100 Lucca (IT)
(74) Representative: Modiano, Micaela Nadia

(57) **Abstract**

A probe (1) for inserting cables into specific ducts which comprises a substantially wire-like and flexible main body (2) which is provided, at one of its ends (3), with anchoring means (4) for at least one cable of type chosen from electric, telephonic, data transfer and the like, and which, on its lateral surface, comprises graduated markings (5) distributed along its axial extension which are designed to identify the exact length of the main body (2) with respect to at least one of its ends (3, 6).

## Description

The present invention relates to a probe for inserting cables into specific ducts. The present description considers electrical wires, cables designed to carry signals (such as telephonic cables and data line cables), fiber optic cables and, in general, any cable that is part of an electrical system or of a data transceiving network, or of a telephone system or of any other specific system (such as anti-intruder systems, alarms, home automation, control and running of machines, interconnection of machines and/or computers, animal removal and the like).

Probes of this type, generally referred to as draw wire probes, are generally constituted by a long cable of flexible material (flexible but sufficiently rigid to be capable of being routed inside a duct) which comprises an eyelet at a first end and an elastic terminal at the opposite end.

This tool is used by installation technicians and electricians to thread electrical wires through the corrugated tubes that are installed in respective chases in walls, floors and ceilings of buildings (in accordance with the plans for the electrical wiring in the building design): the corrugated tubes that define the layout of the electrical wiring constitute the ducts through which the probe needs to pass in order to be able to install electrical wiring.

For the complete wiring of a system it is necessary to insert a high number of electrical wires. Each individual wire must be cut to the length of the portion of duct in which it is to be accommodated, taking account of the need to have portions, protruding from the terminal box or from the junction box, for connection to a respective device/component.

Determining the length of each wire in advance is always a complex matter and therefore normally many skeins of wire (of great length) are used in order to be certain of having sufficiently long portions. In complex systems it is therefore necessary to have a large number of skeins in order to install the wiring, notwithstanding the fact that the overall length of the wires to be threaded is much less than the overall length of all the skeins.

The technician installing the wiring therefore has to obtain an amount of raw material that greatly exceeds the amount actually necessary for the wiring, with a consequent increase in the outlay costs that the technician has to sustain in order to carry out the work. Furthermore, for the technician it is difficult to use portions of wire that he or she has on hand in order to insert them into specific portions of the ducts, as it is not possible to reliably estimate the real length of such portions.

It should be noted that in certain applications where electromagnetic fields are present that generate interference, the choice of one type of wire over another can also be conditioned by the necessary length. In fact it can happen that below a certain threshold of length limit the effects of the interference (or of signal drop or of voltage drop) are negligible, while they become more significant for greater lengths. Currently, installation technicians are forced to always choose a wire of a higher category in order to prevent problems owing to reaching (and exceeding) the threshold length of wires of a lesser category. It follows from this that the cost of the materials that make up the wiring increases, which may be unjustified.

The aim of the present invention is to solve the above mentioned drawbacks, by providing a probe for inserting cables into specific ducts that enables the installation technician to use a smaller number of spools of wire to thread into the ducts, with respect to what is required with probes of the conventional type.

Within this aim, an object of the invention is to provide a probe for inserting cables into specific ducts that enables the installation technician to estimate in advance the necessary length of wire for a certain portion of duct.

Another object of the invention is to provide a probe for inserting cables into specific ducts that enables the installation technician to estimate whether portions of wire that he or she has on hand can be used for being threaded into a specific portion of duct.

Another object of the invention is to provide a probe for inserting cables into specific ducts that enables the installation technician to estimate the effects attributable to interference and/or to voltage drop and/or to signal drop in certain portions of duct.

Another object of the present invention is to provide a probe for inserting cables into specific ducts which is of low cost, easily and practically implemented and safe in use.

This aim and these and other objects which will become better apparent hereinafter are achieved by a probe for inserting cables into specific ducts, characterized in that it comprises a substantially wire-like and flexible main body which is provided, at one of its ends, with anchoring means for at least one cable of a type chosen from electric, telephonic, data transfer and the like, and which, on its lateral surface, comprises graduated markings distributed along its axial extension which are designed to identify the exact length of said main body with respect to at least one of its ends.

Further characteristics and advantages of the invention will become better apparent from the detailed description that follows of a preferred, but not exclusive, embodiment of the probe for inserting cables into specific ducts, which is illustrated by way of non-limiting example in the accompanying drawings wherein:

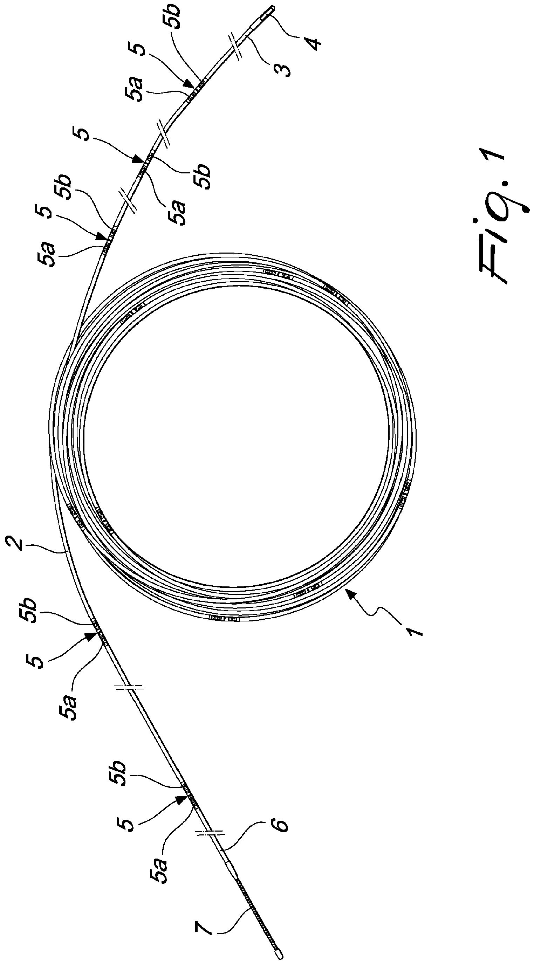

Figure 1 is a schematic perspective view of a possible embodiment of a probe for inserting cables into specific ducts according to the invention;

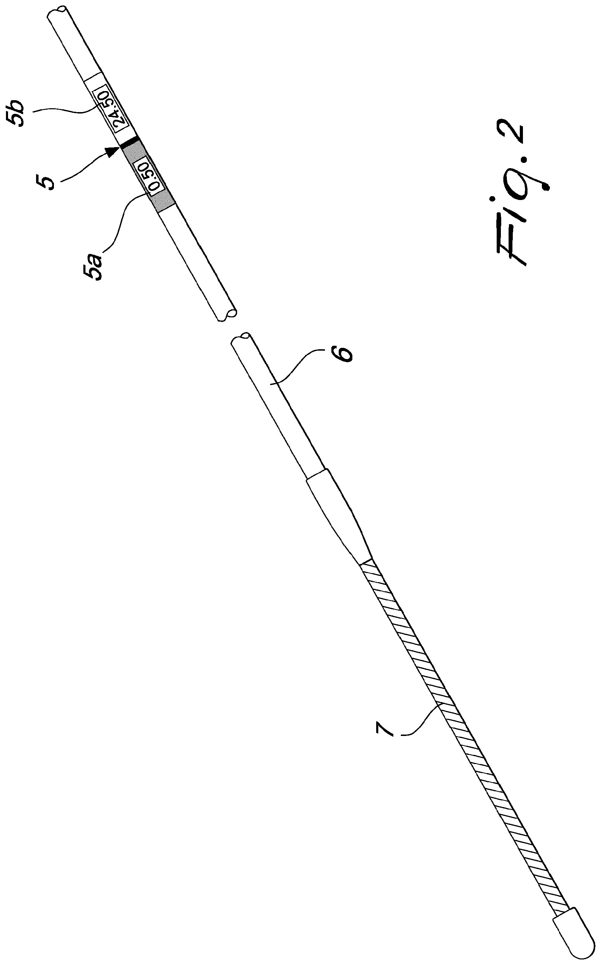

Figure 2 is a schematic perspective view of an enlarged detail of a second end of the probe of Figure 1;

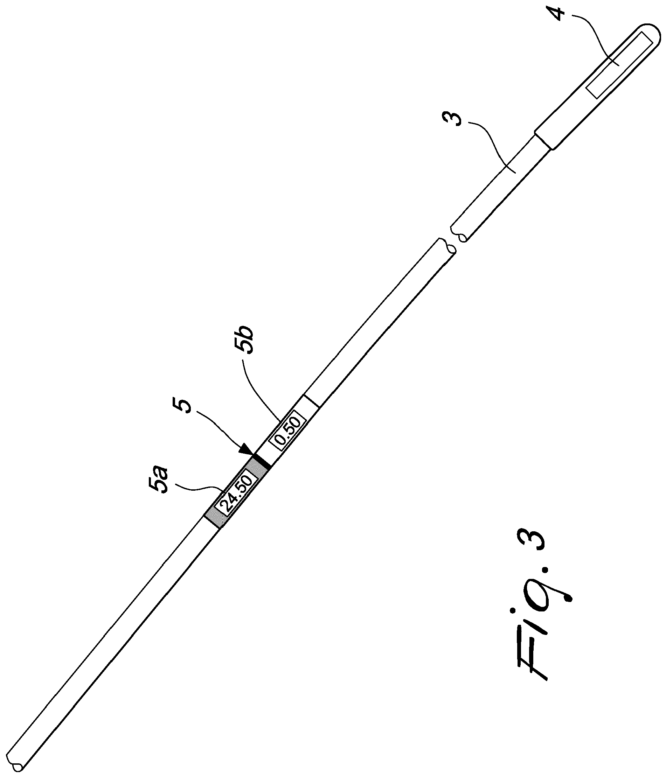

Figure 3 is a schematic perspective view of an enlarged detail of a first end of the probe of Figure 1.

With particular reference to the figures, the reference numeral 1 generally designates a probe for inserting cables into specific ducts.

The probe 1 according to the invention comprises a substantially wire-like and flexible main body 2 which is provided, at one of its ends 3, with anchoring means 4 for at least one cable of type chosen from electric, telephonic, data transfer and the like.

The anchoring means 4 can be constituted by an eyelet, a hook, a slot and the like that make it possible to stably couple a wire to be pulled.

On the lateral surface of the wire-like main body 2 there will advantageously be graduated markings 5, distributed along its axial extension, which are designed to identify the distance of the point that they mark on the main body 2 from at least one of its ends 3 or 6.

It should be noted that, according to the invention, the wire-like main body 2 can also conveniently comprise, at a further end 6 thereof, an elastically deformable terminal 7, which constitutes the insertion front of the probe 1 into the ducts.

The elastically deformable terminal 7 will generally be constituted by a tapered head, a central segment, generally implemented with a helical spring, and a connector designed to be coupled to the end 6 of the wire-like main body 2.

The anchoring means 4 will also comprise a connector part which is designed to be coupled to the respective end 3 of the body 2.

For the purpose of facilitating the substitution of the anchoring means 4 and of the elastically deformable terminals 7, it is possible to provide a threading on the respective connectors: corresponding complementary threadings will be at the ends 3 and 6 of the wire-like main body 2.

It should be noted that, with particular reference to an embodiment of undoubted practical and applicative interest, the graduated markings 5 distributed along its axial extension are dual (5a, 5b), at each marking 5 a first indication 5a will be advantageously designed to identify the distance of the marking 5 from the first end 3 and a second indication 5b will profitably be designed to identify the distance of the marking 5 from the second end 6.

It should be noted that the graduated markings 5 present along the lateral surface of the wire-like main body 2 are arranged at predefined mutual distances.

In particular, these predefined mutual distances can positively be preferably chosen from among 0.01 units of measurement, 0.5 units of measurement, 1 unit of measurement, 2 units of measurement, 5 units of measurement, 10 units of measurement, 50 units of measurement and combinations thereof.

It should be noted that the reference unit of measurement for the lengths of principal interest will be the meter (or possible multiples or submultiples thereof); the possibility is not ruled out however of providing types of probes 1 that use different units of measurement, such as for example inches, feet, yards and the like.

In order to facilitate the immediate understanding of the value read by the operator who uses the probe 1 according to the invention, the indications 5a of the graduated markings 5 referring to the first end 3 are represented with a first graphic code and the indications 5b of the graduated markings 5 referring to the second end 6 are represented with a second graphic code.

It should be noted that the graphic codes adopted can be of a type preferably chosen from the color of the graphic characters, the type of the graphic characters, the background of the graphic characters, the protrusion/cavity of the graphic characters and the like.

The aim will be to immediately make the indications 5a distinguishable from the indications 5b, because it will be sufficient for the operator to read only the value corresponding to the graphic code of interest to him or her.

It should further be noted that the wire-like main body 2 can positively be made of a material chosen from polymeric, composite, metallic and the like. In particular the material that constitutes the wire-like main body 2 can be preferably chosen from polyester, polyamide, polyethylene, fiberglass, composites containing textile fibers, polypropylene, polyurethane, polytetrafluoroethylene, polyethylene terephthalate, combinations thereof and the like.

The wire-like main body 2 can furthermore usefully comprise at least one covering layer made of dielectric material: in this manner, even if the inner core of the wire-like main body 2 is made of electrically conducting material, by virtue of the dielectric covering the entire probe 1 according to the invention will not be electrically conducting.

The outer layer of covering, furthermore, can be useful for the purpose of providing a more slippery outer surface: by adopting covering layers made of self-lubricating materials like polyamide (known with the commercial name Nylon), polytetrafluoroethylene (known with the commercial name Teflon) and the like, it will be possible to obtain an improved sliding of the probe 1 inside the ducts.

In concluding, it should be noted that at least one component chosen from the anchoring means 4 and the elastically deformable terminal 7 can advantageously be made of a material preferably chosen from brass, bronze, copper, aluminum, steel, metallic alloys, composite material, polymeric material and the like.

The use of the present invention is intuitive: by inserting the elastically deformable terminal 7 of the probe 1 into an opening leading to a duct adapted to accommodate electrical wiring, it is possible to insert the entire probe 1 inside that duct (by means of axial pushes exerted on the wire-like main body 2) .

When the elastically deformable terminal 7 comes out of an additional opening of the duct, the probe 1 will have traveled the entire portion of duct inside which it will be necessary to insert the wires of the system being wired.

At the first opening that leads to the duct, it will be possible to check the length of the portion of probe 1 that has passed through that portion of duct: this length will correspond to the length of the wire or wires of the system to be placed in that portion of duct.

The installation technician can then cut the wires to the appropriate length (for example the value read on the lateral surface of the probe 1 via the indications 5a, 5b corresponding to the graduated markings 5, to which suitable lengths need to be added for connecting devices specified at those points in the plans).

The portions of wire thus prepared can be fixed to the anchoring means 4 and pulled into the duct via traction exerted on the probe at its end 6 protruding from the second opening (the end 6 that comprises the elastically deformable terminal 7). Once the probe 1 has completely exited from the duct, the wires will be positioned perfectly in the portion of duct, as specified by the plans.

Advantageously the present invention solves the above mentioned problems, by providing a probe 1 for inserting cables into specific ducts that enables the installation technician to use a smaller number of spools of wire to thread into the ducts, with respect to what is required with probes of the conventional type.

In fact the installation technician, by knowing the exact length of the portion of duct, can actually cut all the necessary wires from a same spool (unless it is necessary to observe specific color codes), thus enormously reducing the number of spools necessary with respect to what is required when probes of the conventional type are used.

Conveniently the probe 1 according to the invention enables the installation technician to estimate in advance the necessary length of wire for a certain portion of duct.

Usefully, the probe 1 according to the invention therefore enables the installation technician to estimate whether portions of wire that he or she has on hand can be used for being threaded into a specific portion of duct.

Advantageously the probe 1 according to the invention enables the installation technician to estimate the effects attributable to interference and/or to voltage drop and/or to signal drop in determined portions of duct: such effects, in fact, are generally proportional to the length of the wire, and by knowing this parameter the installation technician can decide whether a wire of a low category of protection from interference is sufficient, or whether it is necessary to choose higher categories, avoiding the use of expensive wires where these are not really necessary.

Positively the probe 1 according to the invention is easily and practically implemented and is of low cost: such characteristics make the probe 1 according to the invention an innovation that is safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the contingent dimensions and shapes, may be any according to requirements and to the state of the art.

The disclosures in Italian Utility Model Application No. 202021000001901 from which this application claims priority are incorporated herein by reference.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A probe (1) for inserting cables into specific ducts, **characterized in that** it comprises a substantially wire-like and flexible main body (2) which is provided, at one of its ends (3), with anchoring means (4) for at least one cable of a type chosen from electric, telephonic, data transfer and the like, and which, on its lateral surface, comprises graduated markings (5) distributed along its axial extension which are designed to identify the exact length of said main body (2) with respect to at least one of its ends (3, 6).

2. The probe according to claim 1, **characterized in that** said wire-like main body (2) comprises at a further end (6) thereof an elastically deformable terminal (7) which constitutes the insertion front of said probe (1) into said ducts.

3. The probe according to claim 1, **characterized in that** said graduated markings (5) distributed along the axial extension of said main body (2) are dual, at each marking (5) a first indication (5a) being designed to identify the distance of said marking (5) from said first end (3) and a second indication (5b) being designed to identify the distance of said signal (5) from said second end (6).

4. The probe according to claim 1, **characterized in that** said graduated markings (5) present along the lateral surface of said wire-like main body (2) are arranged at predefined mutual distances.

5. The probe according to claim 4, **characterized in that** said predefined mutual distances between said markings (5) are preferably chosen from among 0.01 units of measurement, 0.5 units of measurement, 1 unit of measurement, 2 units of measurement, 5 units of measurement, 10 units of measurement, 50 units of measurement and combinations thereof.

6. The probe according to claim 3, **characterized in that** said indications (5a) of said graduated markings (5) referring to said first end (3) are represented with a first graphic code and said indications (5b) of said graduated markings (5) referring to said second end (6) are represented with a second graphic code, said graphic codes being of type preferably chosen from the color of the graphic characters, the type of the graphic characters, the background of the graphic characters, the protrusion/cavity of the graphic characters and the like.

7. The probe according to claim 1, **characterized in that** wire-like main body (2) is made of a material chosen from polymeric, composite, metallic and the like.

8. The probe according to claim 7, **characterized in that** said material that constitutes said wire-like main body (2) is preferably chosen from polyester, polyamide, polyethylene, fiberglass, composites containing textile fibers, polypropylene, polyurethane, polytetrafluoroethylene, polyethylene terephthalate, combinations thereof and the like.

9. The probe according to claim 7, **characterized in that** said wire-like main body (2) comprises at least one covering layer made of dielectric material.

10. The probe according to one or more of the preceding claims, **characterized in that** at least one component chosen from said anchoring means (4) and said elastically deformable terminal (7) is made of a material preferably chosen from brass, bronze, copper, aluminum, steel, metallic alloys, composite material, polymeric material and the like.
